# EUROPÄISCHE PATENTSCHRIFT

(11) **EP 1 672 254 B1**
(45) Veröffentlichungstag und Bekanntmachung des Hinweises auf die Patenterteilung: **13.02.2008**
(21) Anmeldenummer: 05026295.5
(22) Anmeldetag: 02.12.2005
(51) Int. Cl.: F16H 61/14, F16H 45/02

(54) **Hydrodynamische Kopplungsvorrichtung**
Lockup clutch for hydrodynamic coupling
Accouplement pour convertisseur hydrodynamique

(30) Priorität: 15.12.2004 DE 102004060256
(43) Veröffentlichungstag der Anmeldung: 21.06.2006
(73) Patentinhaber: ZF FRIEDRICHSHAFEN AG, 88046 Friedrichshafen (DE)
(72) Erfinder: Ackermann, Jürgen, 97421 Schweinfurt (DE)

(56) Entgegenhaltungen:
- EP-A- 0 770 797
- DE-A1- 3 543 013
- DE-A1- 10 104 346
- DE-A1- 10 233 335
- FR-A- 2 556 807

## Beschreibung

Die Erfindung betrifft eine hydrodynamische Kopplungsvorrichtung gemäß dem Oberbegriff des Anspruches 1.

Aus der EP 0 770 797 A1 ist eine als Zwei-Leitungs-System ausgebildete, hydrodynamische Kopplungsvorrichtung bekannt, die als hydrodynamischer Drehmomentwandler ausgebildet ist, und deren Kupplungsgehäuse in üblicher Weise mit einem Antrieb, wie beispielsweise einer Brennkraftmaschine, in Drehverbindung gebracht wird. Das Kupplungsgehäuse umfasst ein Pumpenrad, das mit einem Turbinenrad und einem Leitrad einen hydrodynamischen Kreis bildet. Während das Turbinenrad mit einem Abtrieb, wie beispielsweise einer Getriebeeingangswelle, drehfest verbunden ist, ist das Leitrad über einen Freilauf auf einer Stützwelle angeordnet, die radial zwischen einer Pumpenradnabe und der Getriebeeingangswelle vorgesehen ist. Darüber hinaus weist die hydrodynamische Kopplungsvorrichtung auch eine Überbrückungskupplung mit einem Kolben auf, der drehfest, aber axial verlagerbar mit dem Kupplungsgehäuse verbunden ist. Dem Kolben ist an dessen vom Reibbereich abgewandter Seite eine Trennwandung zugeordnet, durch welche gemeinsam mit dem Kolben ein Druckraum begrenzt ist. Da die vom Druckraum abgewandte Seite des Kolbens ebenso wie die vom Druckraum abgewandte Seite der Trennwandung jeweils einem Bereich des hydrodynamischen Kreises zugewandt sind, ist folglich der Kolben und damit die Überbrückungskupplung zumindest im Wesentlichen vom hydrodynamischen Kreis umschlossen. Schließlich ist der Kolben von wenigstens einer Bohrung durchdrungen, durch welche ein definierter Austausch von Kupplungsfluid zwischen dem hydrodynamischen Kreis und dem Druckraum ermöglicht wird.

Nachteilig bei der bekannten hydrodynamischen Kopplungsvorrichtung ist, dass die Trennwandung zusätzlich zu ihrer eigentlichen Funktion der druckdichten Abgrenzung des Druckraumes gegenüber dem hydrodynamischen Kreis auch Zusatzfunktionen wahrnehmen muss. So ist die Trennwandung auch als Ausgangsteil eines Torsionsschwingungsdämpfers wirksam, sowie als Reiborganträger für als Außenlamellen ausgebildete radial äußere Reiborgane der Überbrückungskupplung. Dadurch ergibt sich zum einen für die Trennwandung eine konstruktiv aufwändige Gestaltung sowie eine erhebliche Erstreckungsweite insbesondere in radialer Richtung, während zum anderen die Position der Trennwandung innerhalb des Kupplungsbehäuses zwingend vorgeschrieben ist. Außerdem ergibt sich für die über die Trennwandung antreibbaren radial äußeren Reiborgane eine Bewegung, die aufgrund des zwischen der Trennwandung und dem Kupplungsgehäuse wirksamen Torsionsschwingungsdämpfers vom Kupplungsgehäuse und damit vom Antrieb entkoppelt ist.

Durch die DE 44 23 640 A1 ist eine weitere hydrodynamische Kopplungsvorrichtung als hydrodynamischer Drehmomentwandler ausgebildet, bekannt, deren Kupplungsgehäuse mit einem Antrieb in Drehverbindung gebracht wird und ein Pumpenrad umfasst, das mit einem Turbinenrad und einem Leitrad einen hydrodynamischen Kreis bildet. Während das Turbinenrad mit einem Abtrieb drehfest verbunden ist, ist das Leitrad über einen Freilauf auf einer Stützwelle angeordnet, die radial zwischen einer Pumpenradnabe und der Getriebeeingangswelle vorgesehen ist. Darüber hinaus weist die hydrodynamische Kopplungsvorrichtung auch eine Überbrückungskupplung mit einem Kolben auf, der drehfest, aber axial verlagerbar mit dem Kupplungsgehäuse verbunden ist.

Die hydrodynamische Kopplungsvorrichtung ist als Zwei-Leitungs-System ausgebildet, wodurch sich folgende Druck- bzw. Strömungsverhältnisse ausbilden:

An einen ersten Strömungsweg, der Durchflusskanäle radial zwischen der Pumpenradnabe und der Stützwelle einerseits und radial zwischen der Stützwelle und der Getriebeeingangswelle andererseits aufweist, ist eine erste Druckmittelleitung angeschlossen, die durch beidseits des Freilaufes des Leitrades angeordnete, mit Durchflußkanälen für Kupplungsfluid versehene Druckscheiben zur Versorgung des hydrodynamischen Kreises gebildet wird. Bedingt durch einen Überdruck im hydrodynamischen Kreis wird der Kolben in Richtung zu einem benachbarten Gehäusedeckel des Kupplungsgehäuses beaufschlagt und erfährt dadurch eine Drehmitnahme mit dem Kupplungsgehäuse über Reibflächen. Umgekehrt wird diese Drehmitnahme an der Reibfläche gelöst, wenn über eine zweite Druckmittelleitung ein dem Kolben zugeordneter, axial zwischen demselben und dem Gehäusedeckel vorgesehener Druckraum mit Überdruck gegenüber dem hydrodynamischen Kreis beaufschlagt wird und der Kolben dadurch eine Axialverlagerung in Richtung zum hydrodynamischen Kreis erfährt. Die zweite Druckmittelleitung ist an einen zweiten Strömungsweg angeschlossen, der über eine Mittenbohrung der Getriebeeingangswelle führt. Beide Strömungswege sind jeweils an einen Fluidmittelvorrat angeschlossen.

Wesentliches Prinzip eines derartigen Zwei-Leitungs-Systems, aber auch wesentlicher Nachteil ist die Anordnung der Überbrückungskupplung als Trennstelle zwischen dem hydrodynamischen Kreis und dem Druckraum. Dadurch kommt der zumindest einen Reibfläche in eingerücktem Zustand der Überbrückungskupplung nicht nur die Funktion einer Drehmomentübertragung vom Kupplungsgehäuse auf den Abtrieb unter Umgehung des hydrodynamischen Kreises zu, sondern darüber hinaus eine Abdichtung des hydrodynamischen Kreises gegenüber dem in diesem Betriebszustand im wesentlichen drucklosen Druckraum. Bei ungenügender Abdichtung, beispielsweise aufgrund großzügiger Nutung im Bereich der Reibflächen, würde ein ungewollt starker Volumenstrom an Kupplungsfluid vom hydrodynamischen Kreis über die Überbrückungskupplung in die Druckkammer und damit aus dem Kupplungsgehäuse herausgeführt, und müsste dementsprechend aus dem Fluidmittelvorrat wieder ersetzt werden. Andererseits würde sich bei extremer Abdichtung im Bereich der Überbrückungskupplung infolge einer sehr begrenzten Nutung im Bereich der Reibflächen oder gar bei Verzicht auf eine Nutung das Problem ergeben, dass insbesondere bei durch Schlupf des Kolbens gegenüber dem Kupplungsgehäuse bedingter Aufheizung der zumindest einen Reibfläche sehr rasch eine Verglasung und damit eine Zerstörung von Reibbelägen im Bereich der Reibflächen eintreten würde. Somit muss ein exakt definierter Durchfluss im Bereich der Reibflächen generiert werden, weshalb umfangreiche Erprobungen mit unterschiedlich dimensionierten Nutungen vorgenommen werden müssen. Aber selbst bei korrekter Bemessung der Nutungen ist nicht vermeidbar, dass diese in Abhängigkeit von Verschleiß oder eventueller Toleranzen nicht den exakt erwünschten Volumenstrom an Kupplungsfluid passieren lassen.

Um diese Problematik zu lösen, sind Konstruktionen bekannt, bei denen nicht mehr die Nutung den die Überbrückungskupplung in eingerücktem Zustand passierenden Volumenstrom bestimmt, sondern wenigstens ein Drosseldurchfluss, der gemäß der DE 195 08 855 A1 im Kolben der Überbrückungskupplung im Radialbereich der wenigstens einen Reibfläche vorgesehen ist. Dieser Drosseldurchfluß dient dazu, einer der wenigstens einen Reibfläche zugeordneten Nutung einen exakt definierten Volumenstrom an Kupplungsfluid zuzuführen. Damit werden aufwendige Dimensionierungsabstimmungen der Nutungen zwar hinfällig, jedoch hat sich gezeigt, dass Überbrückungskupplungen mit derartigen Drosseldurchflüssen lediglich für eine partielle Durchströmung von Reibflächen sorgen und dadurch partielle Überhitzungen nicht mit hinreichender Sicherheit verhindert werden.

Der Erfindung liegt die Aufgabe zugrunde, eine als Zwei-Leitungs-System ausgebildete Kopplungsvorrichtung derart auszugestalten, dass bei geringem technischen Aufwand und optimaler Positionierbarkeit der Bauteile der Kopplungsvorrichtung eine hinreichende und gleichmäßige Kühlung zumindest einer Reibfläche einer Überbrückungskupplung sichergestellt ist und dennoch ein exakt vorgegebener, begrenzter Volumenstrom zwischen einem hydrodynamischen Kreis und einer einem Kolben der Überbrückungskupplung zugeordneten Druckkammer gegeben ist.

Diese Aufgabe wird erfindungsgemäß durch die im Anspruch 1 angegebenen Merkmale gelöst. Die Überbrückungskupplung wird derart angeordnet, dass sie zumindest im Wesentlichen vom hydrodynamischen Kreis umschlossen ist. Dadurch bildet die Überbrückungskupplung keine Dichtstelle zwischen Zonen unterschiedlicher Druckbeaufschlagung innerhalb des Kupplungsgehäuses, so dass sowohl an der Strömungseintrittsseite als auch an der Strömungsaustrittsseite der zumindest einen Reibfläche der Überbrückungskupplung jeweils gleicher Druck, nämlich derjenige des hydrodynamischen Kreises, anliegt. Es können also nachteilsfrei Nutungen beträchtlichen Querschnitts oder aber eine Vielzahl von Nutungen kleineren Querschnittes für eine beträchtliche und gleichmäßige Kühlung der Reibflächen Verwendung finden, da ein die zumindest eine Reibfläche passierender Volumenstrom auf diesem Weg den hydrodynamischen Kreis nicht verlassen kann. Statt dessen grenzen hydrodynamischer Kreis und Druckraum an einer von der Überbrückungskupplung entfernten Stelle aneinander, und zwar bevorzugt an der von der Überbrückungskupplung abgewandten Seite des Kolbens.

Bevorzugt bildet dabei der Kolben eine erste Wandung des Druckraumes, der mit Achsversatz in Richtung zum Turbinenrad eine zweite Wandung zugeordnet ist, die einerseits den Druckraum zusammen mit der ersten Wandung, also mit dem Kolben, axial begrenzt, und andererseits eine für Kupplungsfluid undurchlässige Trennung des Druckraumes gegenüber dem hydrodynamischen Kreis herstellt. Folgerichtig schließt sich dieser hydrodynamischer Kreis an die vom Druckraum abgewandte Seite der zweiten Wandung an.

Auch nach radial außen besteht eine Begrenzung des Druckraumes, und zwar durch eine anspruchsgemäße Abdichtung, die zwischen dem Kolben und der zweiten Wandung des Druckraumes wirksam ist. Mit Vorzug wird hierbei die Abdichtung extrem weit radial außen angeordnet, so dass der Druckraum sich ohne weiteres bis in den radialen Außenbereich des Kolbens erstrecken kann, was sich bei Überdruck im Druckraum im Hinblick auf die nutzbare Druckbeaufschlagungsfläche des Kolbens vorteilhaft auswirkt. Selbstverständlich ist die Abdichtung derart auszulegen, dass diese die benötigte axiale Relativverlagerbarkeit des Kolbens gegenüber der zweiten Wandung ermöglicht.

Da aufgrund dieser besonderen Ausgestaltung der hydrodynamischen Kopplungsvorrichtung zwischen Druckraum und hydrodynamischen Kreis eine für Kupplungsfluid durchlässige Verbindungsstelle fehlt, kann an der bestmöglich als Verbindungsstelle geeigneten Position im Kupplungsgehäuse eine Drosselstelle vorgesehen werden, die aufgrund ihrer Bemessung einen exakt definierten Austausch von Kupplungsfluid zwischen dem Druckraum und dem hydrodynamischen Kreis ermöglicht, und zwar in beiden Durchflussrichtungen. So ist bei ausgerückter Überbrückungskupplung der hydrodynamische Kreis über eine erste Druckmittelleitung befüllbar, die mit Vorzug an einem dem hydrodynamischen Kreis zugeordneten, axial zwischen dem Gehäusedeckel des Kupplungsgehäuses und dem Kolben angeordneten Kolbenraum angeschlossen ist. Über diesen Kolbenraum wird der hydrodynamische Kreis mit frischem Kupplungsfluid versorgt, während erhitztes oder verbrauchtes Kupplungsfluid mit einem exakt definierten Volumenstrom über die Drosselstelle das Kupplungsgehäuse über eine zweite Druckmittelleitung verlassen kann. Zum einrücken der Überbrückungskupplung muss nun lediglich der Volumenstrom des Kupplungsfluids über die zweite Druckmittelleitung in den Druckraum eingeleitet werden, in welchem sie sich - sofern die bereits erwähnte Abdichtung radial außen angeordnet ist - bis in diesen Radialbereich ausdehnen kann. Da während dieser Versorgung des Druckraums mit Kupplungsfluid das Kupplungsgehäuse üblicherweise eine Rotationsbewegung um seine Drehachse ausführt, wird die Bewegung des Druckmittels im Druckraum nach radial außen aufgrund der anliegenden Fliehkraft unterstützt, und gleichzeitig ein im Druckraum vorhandenes Luftpolster aufgrund dessen geringerer Dichte nach radial innen verdrängt, wo es, da nachströmendes Kupplungsfluid die zweite Druckmittelleitung versperrt, über die Drosselstelle in den hydrodynamischen Kreis austreten kann. Dadurch befindet sich im Wesentlichen reines Kupplungsfluid im Druckraum, so dass ein gegebenes Einrückerfordernis des Kolbens sehr rasch umgesetzt werden kann. Überdies werden sich hierbei die geringen Abmessungen des Druckraumes axial zwischen dem Kolben und der zweiten Wandung vorteilhaft auswirken.

Mit Vorzug steht hierbei die zweite Wandung in dreh- oder formschlüssiger Verbindung mit dem Kolben, so dass diese Wandung den Kolben zwar an ihrer eigenen Rotationsbewegung um die Drehachse des Kupplungsgehäuses teilhaben lässt, andererseits aber dem Kolben seine für die Ein- oder Ausrückbewegung notwendige Axialverlagerbarkeit gewährt. Insofern übernimmt diese zweite Wandung zusätzlich die Funktion einer Drehsicherung für den Kolben.

Bei Betriebsweisen der hydrodynamischen Kopplungsvorrichtung, bei welchen größere Wärmemengen durch das im hydrodynamischen Kreis enthaltene Kupplungsfluid aus dem Kupplungsgehäuse herausgeführt werden müssen, kann es erforderlich sein, größere Mengen dieses Kupplungsfluids gegen frisches Kupplungsfluid auszutauschen. Da allerdings, wie bereits erläutert, die einzige Strömungsverbindung zwischen dem Druckraum und dem hydrodynamischen Kreis durch die Drosselstelle realisiert ist, und deren Durchflussvolumen durch den gewünschten Volumenstrom insbesondere im hydrodynamischen Kreis vorgegeben wird, müssen andere Möglichkeiten geschaffen werden, um bei Bedarf größere Volumenströme an Kupplungsfluid aus dem hydrodynamischen Kreis herausführen zu können, und zwar idealerweise dann, wenn der hydrodynamische Kreis gerade über die erste Druckmittelleitung mit frischem Kupplungsfluid aufgefüllt wird, was bei der erfindungsgemäßen Gestaltung der Kupplungsvorrichtung bei ausgerückter Überbrückungskupplung der Fall ist. In diesem Betriebszustand ist der hydrodynamische Kreis mit gegenüber dem Druckraum höheren Druck beaufschlagt, so dass ein mit Vorzug in der zweiten Wandung angeordnetes Rückschlagventil durch den Überdruck im hydrodynamischen Kreis geöffnet werden kann und dadurch wenigstens eine zusätzliche Durchflussöffnung freigegeben wird, die ansonsten aufgrund des Rückschlagventils für Kupplungsfluid unpassierbar ist. Sobald ein hinreichender Austausch des im hydrodynamischen Kreis enthaltenen Kupplungsfluids erfolgt ist, kann durch Druckerhöhung im Druckraum über die zweite Druckmittelleitung das Rückschlagventil umgesteuert und dadurch die wenigstens eine zusätzliche Aufnahmeöffnung wieder verschlossen werden. Mit Vorzug ist hierbei das Rückschlagventil als Pilzventil mit einem an die zweite Wandung anpreßbaren Verschlußdeckel ausgebildet, sowie mit einem Schaft, der in einer Aufnahmeöffnung der zweiten Wandung verliergesichert, aber axial verlagerbar aufgenommen ist und ebenso wie der Verschlussdeckel aus Kunststoff bestehen kann.

Interessanterweise wird bei der erfindungsgemäßen Kopplungsvorrichtung nicht nur die jeweilige Axialposition des Kolbens der Überbrückungskupplung durch die beidseits des Kolbens mündenden Druckmittelleitungen bestimmt, sondern darüber hinaus auch die Druck- und Befüllsituation im hydrodynamischen Kreis. Dadurch entfällt eine Zuleitung, wie sie bei konventionellen Kopplungsvorrichtungen im Erstreckungsbereich des Freilaufes für das Leitrad durch beidseits desselben angeordnete Druckscheiben realisiert ist. Zwar können auch bei der erfindungsgemäßen Kopplungsvorrichtung derartige Druckscheiben vorhanden sein, jedoch sind diese nicht auf die ansonsten üblichen Durchflußkanäle zur Versorgung des hydrodynamischen Kreises angewiesen und vermögen demnach die am Freilauf auftretende Axialbelastung mit geringer Flächenpressung aufzunehmen.

Wie bereits erläutert, gestaltet sich der Einrückvorgang aufgrund des kompakten und im wesentlichen von einem Luftpolster freien Druckraums sehr spontan, so dass beim Einrücken eine Unterstützung durch eine Axialfederung nicht erforderlich ist. Auch zum Ausrücken wird, wegen ebenfalls kompakter Ausbildung des Kolbenraums axial zwischen dem Gehäusedeckel und dem Kolben der Überbrückungskupplung keine Axialfederung benötigt. Dennoch kann das Ausrücken mit Unterstützung durch eine Axialfederung von Vorteil sein, zumal der Kolben in Achsrichtung relativ große Wege zurücklegen kann und die Axialfederung hierbei nicht nur für einen hinreichenden Axialabstand gegenüber der wenigstens einen Reibfläche der Überbrückungskupplung sorgt, sondern darüber hinaus auch für einen sehr raschen Abhub von derselben. Dadurch sind Schleppverluste im Bereich der Überbrückungskupplung weitgehend eliminierbar.

Die Erfindung ist nachfolgend anhand einer Zeichnung ausführlich erläutert. Es zeigt:
- Fig. 1: die obere Hälfte eines Längsschnittes durch einen hydrodynamischen Drehmomentwandler mit Überbrückungskupplung in Zwei-Leitungs-Ausführung;
- Fig. 2: eine Reibfläche der Überbrückungskupplung in Draufsicht
- Fig. 3: wie Fig. 2, aber mit anderer konstruktiver Ausbildung
- Fig. 4: ein Rückschlagventil in vergrößerter Herauszeichnung.

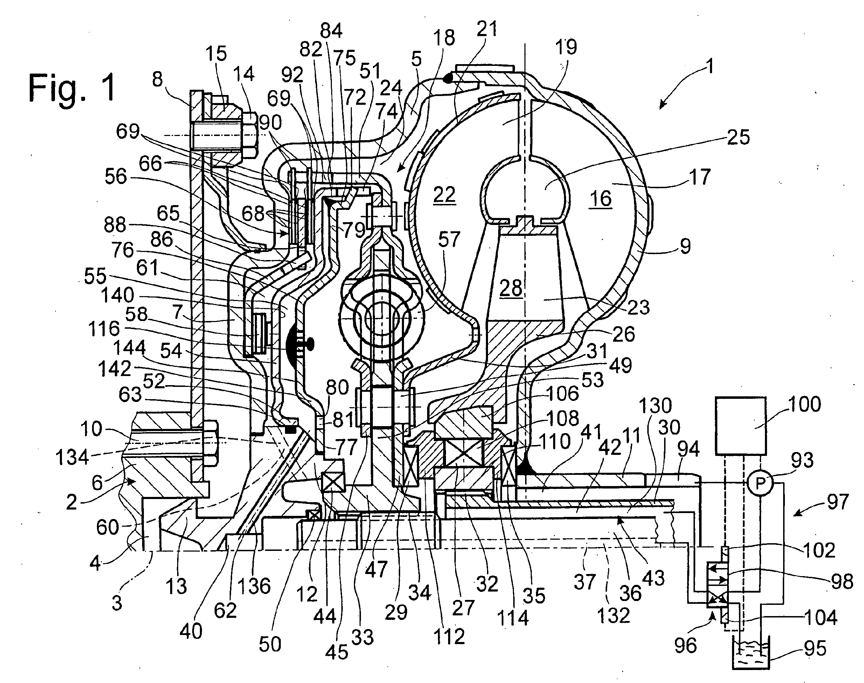

In Fig. 1 ist eine hydrodynamische Kopplungsvorrichtung 1 in Form eines hydrodynamischen Drehmomentwandlers dargestellt, der um eine Drehachse 3 Rotationsbewegungen auszuführen vermag. Der hydrodynamische Drehmomentwandler verfügt über ein Kupplungsgehäuse 5, das an seiner einem Antrieb 2, wie beispielsweise einer Brennkraftmaschine mit einer Kurbelwelle 6, zugewandten Seite einen Gehäusedeckel 7 aufweist, der fest mit einer Pumpenradschale 9 verbunden ist. Diese geht im radial inneren Bereich in eine Pumpenradnabe 11 über.

Zurückkommend auf den Gehäusedeckel 7, weist dieser im radial inneren Bereich eine einen Lagerzapfen 13 tragende Zapfennabe 12 auf, wobei der Lagerzapfen 13 in einer Ausnehmung 4 der Kurbelwelle 6 zur antriebsseitigen Zentrierung des Kupplungsgehäuses 5 aufgenommen ist. Weiterhin verfügt der Gehäusedeckel 7 über eine Befestigungsaufnahme 15, die über eine Flexplatte 8 zur Befestigung des Kupplungsgehäuses 5 an der Kurbelwelle 6 dient, und zwar mittels Befestigungselementen 14, vorzugsweise in Form von Schrauben. Die Flexplatte 8 ihrerseits ist über Befestigungselemente 10, ebenfalls vorzugsweise in Form von Schrauben, an der Kurbelwelle 6 befestigt.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Das letztgenannte verfügt über an einer Leitradnabe 26 vorgesehene Leitradschaufeln 28 und bildet gemeinsam mit dem Pumpenrad 17 und dem Turbinenrad 19 einen hydrodynamischen Kreis 24, der einen Innentorus 25 umschließt.

Das Leitrad 23 ist über seine Leitradnabe 26 auf einem Außenkörper 106 eines Freilaufes 27 angeordnet, der über einen Wälzelemententeil 108 auf einem Innenkörper 110 angeordnet ist. Der Außenkörper 106 zentriert über eine antriebsseitige Druckscheibe 112 sowie über eine abtriebsseitige Druckscheibe 114, die beide nutungsfrei ausgebildet sind, den Innenkörper 110, und stützt sich antriebsseitig über die antriebsseitige Druckscheibe 112, eine antriebsseitige Axiallagerung 29, einen Torsionsschwingungsdämpfer 18 und eine Lagerung 44 an der Zapfennabe 12 axial ab, abtriebsseitig dagegen über die abtriebsseitige Druckscheibe 114 und eine abtriebsseitige Axiallagerung 35 an der Pumpenradnabe 11.

Das Leitrad 23 steht über den Innenkörper 110 seines Freilaufes 27 in drehfester, aber axial relativ verschiebbarer Verzahnung 32 mit einer Stützwelle 30, die unter Belassung eines im Wesentlichen ringförmigen, radial äußeren Kanalraumes 41 radial innerhalb der Pumpenradnabe 11 angeordnet ist. Die als Hohlwelle ausgebildete Stützwelle 30 ihrerseits umschließt unter Belassung eines als ersten Strömungsweg 130 dienenden, im Wesentlichen ringförmigen Durchflusskanals 42 eine als Abtrieb 43 wirksame Getriebeeingangswelle 36, die mit einer Mittenbohrung 37 zum Durchgang von Kupplungsfluid versehen ist und daher als zweiter Strömungsweg 132 dient. Die Getriebeeingangswelle 36 nimmt über eine Verzahnung 34 eine mittels einer Dichtung 50 abgedichtete Torsionsdämpfernabe 33 drehfest, aber axial verschiebbar auf, wobei diese Torsionsdämpfernabe 33 zur Zentrierung eines abtriebsseitigen Deckbleches 47 dient. Das Deckblech 47 ist mittels Durchgangsnieten 49, welche die Torsionsdämpfernabe 33 mit Spiel in Umfangsrichtung durchdringen, einerseits mit einem Turbinenradfuß 31 des Turbinenrades 19 und andererseits mit einem antriebsseitigen Deckblech 45 fest verbunden. Die Deckbleche 45, 47 bilden zusammen mit dem Turbinenrad 19 einen Eingangsteil 51 des Torsionsschwingungsdämpfers 18, während die Torsionsdämpfernabe 33 dessen Ausgangsteil 53 bildet. In Umfangsrichtung zwischen Eingangsteil 51 und Ausgangsteil 53 sind Dämpfungselemente 57 vorgesehen, die eine vorbestimmte Relativauslenkbarkeit zwischen Eingangsteil 51 und Ausgangsteil 53 um die Drehachse 3 ermöglichen, wobei diese Relativauslenkbarkeit durch die als Anschläge 64 wirksamen Durchgangsniete 49 begrenzt wird.

Der bereits erwähnte Durchflußkanal 42 führt, axial dicht benachbart zur Dichtung 50, zu einer ersten Druckmittelleitung 60, die durch zumindest einen in der Zapfennabe 12 mit einer Radialkomponente verlaufenden Kanal 134 gebildet wird. Die erste Druckmittelleitung 60 mündet in einen Kolbenraum 61 axial zwischen dem Gehäusedeckel 7 und einem Kolben 54 einer Überbrückungskupplung 56. Die vom Kolbenraum 61 abgewandte Seite 140 des Kolbens 54 bildet eine erste Wandung 142 eines Druckraums 55, der an seiner vom Kolben 54 abgewandten Seite von einer zweiten Wandung 144 begrenzt ist, die aus nachfolgend erläuterten funktionalen Gründen im folgenden als Drehsicherung 76 bezeichnet ist. Diese ist an der Zapfennabe 12 befestigt und weist in ihrem radialen Erstreckungsbereich am radial inneren Ende 77 eine Drosselstelle 80 in Form zumindest einer Durchgangsöffnung 81 auf, welche den Druckraum 55 mit dem hydrodynamischen Kreis 24 verbindet. Im radial mittleren Erstreckungsbereich kann die Drehsicherung 76 mit einem Rückschlagventil 116 ausgebildet sein, auf dessen konstruktive Ausführung, Wirkungsweise und Funktion an anderer Stelle ausführlich eingegangen wird. Im radialen Erstreckungsbereich am radial äußeren Ende 79 der Drehsicherung 76 ist ein Axialansatz 75 ausgebildet, der an seinem dem Kolben 54 zugewandten Ende eine Abdichtung 82 trägt, die an einem am Kolben 54 angeformten, sich im Wesentlichen axial erstreckenden Bund 84 dichtend zur Anlage kommt, während der Axialansatz 75 an seinem vom Kolben 54 abgewandten freien Ende eine Verzahnung 72 trägt, mit welcher er im Wesentlichen spielfrei in Umfangsrichtung, aber eine Axialbewegung des Kolbens 54 in Axialrichtung zulassend, in eine am freien Ende des Bundes 84 des Kolbens 54 ausgebildete Gegenverzahnung 74 eingreift.

Zur Versorgung des Druckraumes 55 mit Kupplungsfluid ist die Mittenbohrung 37 der Getriebeeingangswelle 36 mit einem in der Zapfennabe 12 ausgebildeten Übergangsraum 40 verbunden, der an einer zweiten Druckmittelleitung 62 angeschlossen ist, die in Form zumindest eines in der Zapfennabe 12 mit einer Radialkomponente verlaufenden Kanals 134 ausgebildet ist. Die zweite Druckmittelleitung 62 mündet in den Druckraum 55. Entsprechend der Beaufschlagung der ersten Druckmittelleitung 60 oder der zweiten Druckmittelleitung 62 und damit in Abhängigkeit von den Druckverhältnissen im hydrodynamischen Kreis 24 sowie im Druckraum 55 ist der Kolben 54 in Axialrichtung zwischen zwei unterschiedlichen Grenzstellungen bewegbar, auf die nachfolgend noch eingegangen wird. Der Kolben 54 ist mittels eines auf der Zapfennabe 12 gelagerten Kolbenfußes 52 axial verschiebbar, wobei eine in der Zapfennabe 12 eingelassene Kolbendichtung 63 ihre Abdichtfunktion gegenüber dem Kolbenfuß 52 wahrnimmt. Im radial mittleren Bereich des Kolbens 54 kann dieser über eine Axialfederung 58 in Form von Tangentialblattfedern mittels nicht gezeigter Nietverbindungen an einem am Gehäusedeckel 7 befestigten Innenlamellenträger 86 der Überbrückungskupplung 56 aufgenommen sein.

Axial zwischen dem Gehäusedeckel 7 und dem Kolben 54 ist, im radial äußeren Bereich des letztgenannten, eine mit dem Innenlamellenträger 86 mittels einer Verzahnung 88 drehfeste radial innere Lamelle 65 angeordnet, an der zu beiden Seiten radial äußere Lamellen 66 vorgesehen sind, die über jeweils eine Verzahnung 90 drehfest an einem Außenlamellenträger 92 aufgenommen sind, der einstückig mit dem abtriebsseitigen Deckblech 47 des Torsionsschwingungsdämpfers 18 ausgebildet ist. Die radial äußeren Lamellen 66 verfügen jeweils über beidseitige Reibbeläge 68, wobei durch die beiden jeweils der radial inneren Lamelle 65 zugewandten Reibbeläge 68 in Verbindung mit je einer an der radial inneren Lamelle 65 vorgesehenen Reibzone je ein Reibbereich 69 bereitgestellt wird, während durch einen der beiden von der radial inneren Lamelle 65 abgewandten Reibbeläge 68 ein Reibbereich 69 mit einer Reibzone am Gehäusedeckel 7 und durch den anderen dieser beiden Reibbeläge 68 ein Reibbereich 69 mit einer Reibzone am Kolben 54 gebildet wird.

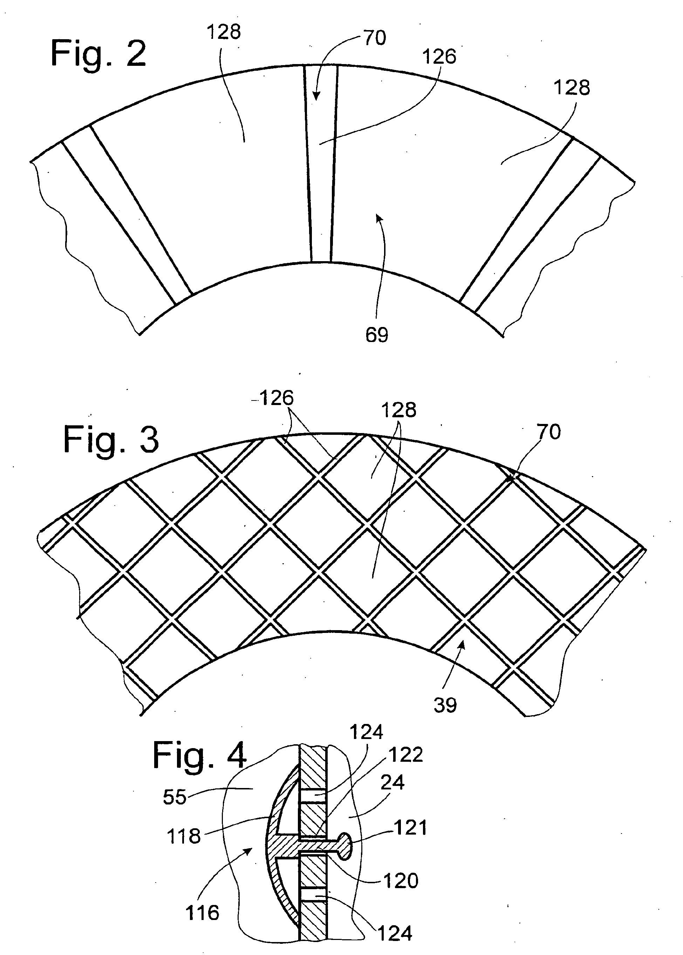

Die einzelnen Reibbereiche 69 werden aktiviert, sobald die Reibbeläge 68 mit der jeweils zugeordneten Reibzone in Wirkverbindung treten, was durch Einrücken des Kolbens 54 und damit der Überbrückungskupplung 56 geschieht. Das Einrücken des Kolbens 54 ist beendet, wenn der Kolben 54 die größtmögliche Axialannäherung innerhalb seines axialen Bewegungsbereichs an den Gehäusedeckel 7 erfahren hat. Für den Einrückvorgang wird im Druckraum 55 ein höherer Druck als im Kolbenraum 61 aufgebaut. Da der Kolbenraum 61 durch die Überbrückungskupplung 56 mit dem hydrodynamischen Kreis 24 in Verbindung steht, und die Überbrückungskupplung 56, wie anhand der Fig. 2 oder 3 erkennbar ist, im Bereich der Reibbeläge 68 über Nutungen 70 mit einer Größe oder in einer Vielzahl verfügt, die einen vergleichsweise hohen Volumenstrom an Kupplungsfluid passieren lassen, ist der Kolbenraum 61 als Teil des hydrodynamischen Kreises 24 zu betrachten.

Umgekehrt werden die einzelnen Reibbereiche 69 deaktiviert, sobald die Wirkverbindung der Reibbeläge 68 mit der jeweils zugeordneten Reibzone aufgehoben wird, was durch Ausrücken des Kolbens 54 und damit der Überbrückungskupplung 56 erfolgt. Das Ausrücken des Kolbens 54 ist beendet, wenn der Kolben 54 die größtmögliche Axialentfernung innerhalb seines axialen Bewegungsbereichs weg vom Gehäusedeckel 7 erfahren hat. Für den Ausrückvorgang wird im hydrodynamischen Kreis 24 und damit im Kolbenraum 61 ein höherer Druck als im Druckraum 55 erzeugt.

Das Ein- oder Ausrücken des Kolbens 54 der Überbrückungskupplung 56 wird wie folgt vorgenommen:

Der bereits erwähnte Durchflußkanal 42 radial zwischen der Stützwelle 30 und der Getriebeeingangswelle 36 dient über die ersten Druckmittelleitungen 60 zur Versorgung des hydrodynamischen Kreises 24 über den Kolbenraum 61 und die Überbrückungskupplung 56 mit Kupplungsfluid, während die Mittenbohrung 37 in der Getriebeeingangswelle 36 über den Übergangraum 40 und die zweiten Druckmittelleitungen 62 zur Versorgung des Druckraumes 55 mit Kupplungsfluid dient. Zur Gewährleistung der jeweils korrekten Versorgung ist ein in Fig. 1 mit eingezeichneter Druckkreis 97 notwendig, der über eine Druckquelle 93 verfügt, deren Antrieb in üblicher Weise durch einen Antriebsnocken 94 an der Pumpenradnabe 11 erfolgt, während deren Saugseite S mit einem Fluidmittelvorrat 95 und deren Druckseite D entweder mit dem Durchflußkanal 42 zwischen der Stützwelle 30 und der Getriebeeingangswelle 36 verbunden werden kann, oder aber mit der Mittenbohrung 37 der Getriebeeingangswelle 36. Die jeweilige Versorgung von Durchflußkanal 42 oder Mittenbohrung 37 mit Kupplungsfluid erfolgt entsprechend den Vorgaben einer Steuervorrichtung 100, die sowohl mit einer im Druckkreis 97 enthaltenen Umschaltvorrichtung 96 in Form eines Umschaltventils 98 als auch mit der Druckquelle 93 in Wirkverbindung steht. Mit Vorzug ist hierbei das Umschaltventil 98 als 4/2-Wegeventil ausgebildet, mit Betätigung durch Elektromagnete 102, 104, die entsprechend der Ansteuerung durch die Steuervorrichtung 100 für eine zugeordnete Auslenkung der Umschaltvorrichtung 96 sorgen.

Fig. 1 zeigt den Zustand mit dem Kolben 54 in Einrückposition. Zum Ausrücken des Kolbens 54 wird die Umschaltvorrichtung 96 durch mittels der Steuervorrichtung 100 vorgenommenen Ansteuerung des Elektromagneten 102 derart beaufschlagt, dass dieser das Umschaltventil 88 aus der in Fig. 1 eingezeichneten Position in eine zweite Position verschiebt, in welcher die Druckseite D der Druckquelle 93 mit dem Durchflußkanal 42 radial zwischen der Stützwelle 30 und der Getriebeeingangswelle 36 verbunden ist. Dort nimmt folglich der Druck zu, während er gleichzeitig in der Mittenbohrung 37 der Getriebeeingangswelle 36, die nun über das Umschaltventil 98 mit dem Fluidmittelvorrat 95 verbunden ist, absinkt.

Das über den Durchflußkanal 42 eingeströmte Kupplungsfluid gelangt über die erste Druckmittelleitung 60 in den Kolbenraum 61 und beaufschlagt dort den Kolben 54 in Richtung zum Druckraum 55, dessen Entleerung über die zweite Druckmittelleitung 62 einsetzt. Aufgrund des sich dadurch aufbauenden Überdruckes im Kolbenraum 61 und damit auch in dem mit dem Kolbenraum 61 im Wesentlichen druckgleichen hydrodynamischen Kreis 24 gegenüber dem Druckraum 55 wird der Kolben 54 an seiner antriebsseitigen Kolbenwand belastet, wodurch eine Verlagerungsbewegung des Kolbens 54 in Richtung zum Torsionsschwingungsdämpfer 18 ausgelöst wird. Sofern der Kolben 54 mittels der Axialfederung 58 am Gehäusedeckel 7 befestigt ist, und diese Axialfederung 58 über eine Wirkrichtung verfügt, in welcher sie die Ausrückbewegung des Kolbens 54 unterstützt, wird die Auslenkung des Kolbens 54 weiter beschleunigt, so dass Schleppmomente an den Reibbereichen 69 auf ein Minimum reduziert sind.

Bei weiter in den Kolbenraum 61 nachströmendem Kupplungsfluid passiert dieses infolge des zügig ausrückenden Kolbens 54 den Bereich der Überbrückungskupplung 56 problemlos und gelangt somit als frisches Kupplungsfluid in den hydrodynamischen Kreis 24. Gleichzeitig kann bereits im hydrodynamischen Kreis 24 enthaltenes erhitzes Kupplungsfluid über die Drosselstelle 80 in den Druckraum 55 absickern, um von dort aus über die zweite Druckmittelleitung 62, den Übergangsraum 40 und die Mittenbohrung 37 der Getriebeeingangswelle 36 in den Fluidmittelvorrat 95 abgeleitet zu werden.

Sofern bei ausgerücktem Kolben 54 jeweils ein erheblicher Austausch an Kupplungsfluid im hydrodynamischen Kreis 24 vorgenommen werden soll, besteht die Möglichkeit, in der Drehsicherung 76 ein Rückschlagventil 116 einzusetzen. Dieses kann gemäß Fig. 4 als pilzförmiges Kunststoffteil ausgebildet sein mit einem Verschlußdeckel 118 und einem daran angeformten, im Wesentlichen zylinderförmigen Schaft 120, der eine Aufnahmeöffnung 122 der Drehsicherung 76 axial durchdringt und in dieser Aufnahmeöffnung 122 mittels einer Verliersicherung 121 derart gehalten ist, dass er zwar axial verlagerbar, gleichzeitig aber gegenüber der Drehsicherung 76 unlösbar gehalten ist. Dicht benachbart der Aufnahmeöffnung 122 für den Schaft 120 ist die Drehsicherung 76 von wenigstens einer Durchlaßöffnung 126 durchdrungen, über welche der Verschlußdeckel 118 bei einem Überdruck im hydrodynamischen Kreis 24 gegenüber dem Druckraum 55 von der Seite des hydrodynamischen Kreises 24 aus beaufschlagbar ist. Dadurch wird über die Durchlaßöffnung 126 ein Abhub des Verschlußdeckels 118 von der gegenüber liegenden Seite der Drehsicherung 76 ausgelöst, so dass ein die Drosselstelle 80 ergänzender Abflußweg für Kupplungsfluid durch die Durchlaßöffnung 126 frei gegeben wird. Je nach von der Druckdifferenz abhängiger Öffnungsweite des Verschlußdeckels 118 sowie in Abhängigkeit von der Bemessung von dessen Durchmesser und-der Anzahl und/oder Größe von Durchlaßöffnungen 122. kann ein entsprechender Durchsatz von Kupplungsfluid aus dem hydrodynamischen Kreis 24 in den Druckraum 55 und von diesem in den Fluidmittelvorrat 95 erzeugt werden.

Um den Kolben 54 wieder einzurücken, wird die Umschaltvorrichtung 96 durch mittels der Steuervorrichtung 100 jetzt vorgenommener Ansteuerung des Elektromagneten 104 derart beaufschlagt, dass dieser das Umschaltventil 88 aus der bisherigen Position in die in Fig. 1 eingezeichnete Position zurück schiebt, in welcher die Druckseite D der Druckquelle 93 mit der Mittenbohrung 37 der Getriebeeingangswelle 36 verbunden ist. Dort nimmt folglich der Druck zu, während er gleichzeitig im Durchflußkanal 42, der radial zwischen der Stützwelle 30 und der Getriebeeingangswelle 36 vorgesehen und nun über das Umschaltventil 98 mit dem Fluidmittelvorrat 95 verbunden ist, absinkt. Aufgrund dieser Druck- und Anschlußsituation wird Kupplungsfluid vom Fluidmittelvorrat 95 über die Mittenbohrung 37 der Getriebeeingangswelle 36 und die zweite Druckmittelleitung 62 in den Druckraum 55 geleitet. Unterstützt durch die Rotation des Kupplungsgehäuses 5 um die Drehachse 3 drängt das Kupplungsfluid dort nach radial außen, wo ihm aufgrund der Abdichtung 82 eine Weiterbewegung versperrt ist. Bei dieser Befüllung des Druckraumes 55 wird darin eventuell enthaltene Luft nach radial innen verdrängt, und kann, da bei Druckanstieg im Druckraum 55 das Rückschlagventil 116 mit seinem Verschlußdeckel 118 gegen die Durchlaßöffnung 124 gepreßt ist und dadurch eine Verbindung mit dem hydrodynamischen Kreis 24 verschließt, nur über die Drosselstelle 80 in den hydrodynamischen Kreis 24 entweichen, wo es aufgrund des im Vergleich zum Druckraum 55 großen Volumens keine spürbaren Nachteile auslöst. Der Druckraum 55 dagegen wird nicht nur, wegen seiner kompakten Abmessungen, rasch befüllt, sondern enthält auch kein kompressibles Luftpolster, so dass sich sehr zügig ein Überdruck gegenüber dem hydrodynamischen Kreis 24 aufbaut. Dadurch kann auch die Gegenkraft der Axialfederung 58 beim Einrücken des Kolbens 54 problemlos überwunden werden. Gleichzeitig wird der hydrodynamische Kreis 24 über den Kolbenraum 61 und die erste Druckmittelleitung 60 in den Durchflußkanal 42 und von diesem in den Fluidmittelvorrat 95 entleert. Dieses Entleeren wird selbst bei fortschreitendem Einrückvorgang des Kolbens 54 und auch bei völlig eingerücktem Kolben 54 nur unwesentlich behindert, da gemäß Fig. 2 oder 3 zwischen je zwei Reibbelagsegmenten 128 im Bereich der Reibflächen 69 eine Nutung 70 vorgesehen ist, die einen hohen Volumenstrom des Kupplungsfluids durch die Überbrückungskupplung 56 ermöglicht, und dadurch eine effiziente Kühlung der Reibflächen 69 erlaubt. Diese Nutung 70 ist hierfür entweder gemäß Fig. 2 mit breiten Nutungskanälen 126 zwischen je zwei Reibsegmenten 128 der Reibfläche 69 ausgebildet, oder aber gemäß Fig. 3 mit einer Vielzahl von Nutungskanälen 126 zwischen den jeweiligen Reibsegmenten 128.

Eine derart durchflußintensive Ausgestaltung der Reibflächen 69 ist bei einem als Zwei-Leitungs-System ausgebildeten hydrodynamischen Drehmomentwandler, bei welchem eine erste Leitung den hydrodynamischen Kreis 24 und eine zweite Leitung den Druckraum 55 mit Kupplungsfluid versorgen kann, nur deshalb möglich, weil, abweichend von der üblichen Ausgestaltung derartiger Zwei-Leitungs-Systeme, die Überbrückungskupplung 56 allein zur Übertragung von Drehmoment im eingerückten Zustand des Kolbens 54 vom Antrieb 2 zum Abtrieb 43 unter Umgehung des hydrodynamischen Kreises 24 dient, und nicht die zusätzliche Funktion einer Abdichtung des hydrodynamischen Kreises 24 gegenüber dem Druckraum 55 übernehmen muß. Dies liegt daran, dass die Überbrückungskupplung 56 in Strömungsrichtung des Kupplungsfluids zwischen dem hydrodynamischen Kreis 24 und dem als Teil desselben anzusehenden Kolbenraum 61 angeordnet ist, so dass über die Überbrückungskupplung 56 abströmendes Kupplungsfluid dennoch nicht den hydrodynamischen Kreis 24 verlässt. Die Isolation des hydrodynamischen Kreises 24 vom Druckraum 55 erfolgt statt dessen durch die Drehsicherung 76, so dass eine Beeinflussung des Volumenstromes an Kupplungsfluid zwischen hydrodynamischem Kreis 24 und Druckraum 55 allein über die Drosselstelle 80 erfolgt, die nur bei Wunsch eines stärkeren Austausches von Kupplungsfluid durch die Durchflußöffnung 124 des Rückschlagventils 116 ergänzt werden kann.

Aufgrund dieser besonderen Wirkungsweise des hydrodynamischen Drehmomentwandlers 1 wird dessen hydrodynamischer Kreis 24 auch nicht, wie bei bisherigen Zwei-Leitungs-Systemen üblich, im axialen Erstreckungsbereich des Leitrades 23 mit Kupplungsfluid versorgt, beispielsweise über Nutungen in den Druckscheiben 112, 114 des das Leitrad 23 aufnehmenden Freilaufes 27, sondern statt dessen im axialen Erstreckungsbereich der Überbrückungskupplung 56, also konkret über die erste Druckmittelleitung 60, den Kolbenraum 61 und schließlich die Überbrückungskupplung 56. Aus diesem Grund können, wie bereits zum Ausdruck gebracht, die Druckscheiben 112, 114 ohne die übliche Durchflußnutung ausgebildet sein.

### Bezugszeichenliste

- 1.: hydrodyn. Kopplungsvorrichtung
- 2.: Antrieb
- 3.: Drehachse
- 4.: Ausnehmung
- 5.: Kupplungsgehäuse
- 6.: Kurbelwelle
- 7.: Gehäusedeckel
- 8.: Flexplatte
- 9.: Pumpenradschale
- 10.: Befestigungselemente
- 11.: Pumpenradnabe
- 12.: Zapfennabe
- 1 3.: Lagerzapfen
- 14.: Befestigungselemente
- 15.: Befestigungsaufnahme
- 1 6: Pumpenradschaufeln
- 1 7.: Pumpenrad
- 18.: Torsionsschwingungsdämpfer
- 19.: Turbinenrad
- 21.: Turbinenradschale
- 22: Turbinenradschaufeln
- 23.: Leitrad
- 24.: hydrodynamischer Kreis
- 25.: Innentorus
- 26.: Leitradnabe
- 27.: Freilauf
- 28: Leitradschaufeln
- 29.: antriebsseitige Axiallagerung
- 30.: Stützwelle
- 31.: Turbinenradfuss
- 32: Verzahnung
- 33.: Torsionsdämpfernabe
- 34: Verzahnung
- 35.: abtriebsseitige Axiallagerung
- 36.: Getriebeeingangswelle
- 37.: Mittenbohrung
- 40.: Übergangsraum
- 41.: Kanalraum
- 42.: Durchflußkanal
- 43.: Abtrieb
- 44.: Axiallagerung
- 45.: antriebsseitiges Deckblech
- 47.: abtriebsseitiges Deckblech
- 49.: Durchgangsniete
- 50.: Dichtung
- 51.: Eingangsteil
- 52.: Kolbenfuß
- 53.: Ausgangsteil
- 54.: Kolben
- 55.: Druckraum
- 56.: Überbrückungskupplung
- 57.: Dämpfungselemente
- 58.: Axialfederung
- 60.: erste Druckmittelleitung
- 61.: Kolbenraum
- 62.: zweite Druckmittelleitung
- 63.: Kolbendichtung
- 65.: Lamelle
- 66.: Lamelle
- 68.: Reibbelag
- 69.: Reibbereich
- 70.: Nutungen
- 72.: Verzahnung
- 74.: Gegenverzahnung
- 75.: Axialansatz
- 76.: Drehsicherung
- 77.: radial inneres Ende
- 79.: radial äußeres Ende
- 80.: Drosselstelle
- 81.: Durchgangsöffnung
- 82.: Abdichtung
- 84.: Bund
- 86.: Innenlamellenträger
- 88.: Verzahnung
- 90.: Verzahnung
- 92.: Außenlamellenträger
- 93.: Druckquelle
- 94.: Antriebsnocke
- 95.: Fluidmittelvorrat
- 96.: Umschaltvorrichtung
- 97.: Druckkreis
- 98.: Umschaltventil
- 100.: Steuervorrichtung
- 102.: Elektromagnet
- 104.: Elektromagnet
- 106.: Außenkörper
- 108.: Wälzelemententeil
- 110.: Innenkörper
- 112.: antriebsseitige Druckscheibe
- 114.: abtriebsseitige Druckscheibe
- 116.: Rückschlagventil
- 118.: Verschlußdeckel
- 120.: Schaft
- 121.: Verliersicherung
- 122.: Aufnahmeöffnung
- 124.: Durchflußöffnung
- 126.: Nutungskanäle
- 128.: Reibsegmente
- 130.: erster Strömungsweg
- 132.: zweiter Strömungsweg
- 134.: Kanal
- 136.: Kanal
- 140.: Seite des Kolbens
- 142.: erste Wandung
- 144.: zweite Wandung

## Patentansprüche

1. Hydrodynamische Kopplungsvorrichtung (1), aufweisend zumindest ein mit einem Antrieb (2) über ein Kupplungsgehäuse (5) verbundenes Pumpenrad (17) und ein mit einem Abtrieb (43) verbundenes Turbinenrad (19) zur Bildung eines hydrodynamischen Kreises (24), eine Überbrückungskupplung (56) mit wenigstens einem Kolben (54) und zumindest einer zwischen diesem und einer benachbarten Abstützung (7) wirksamen Reibfläche (69) zur Verbindung des Antriebs (2) mit dem Abtrieb (43) unter Umgehung des hydrodynamischen Kreises (24), und einem Druckkreis (97) in Form eines Zwei-Leitungs-Systems mit einer ersten Druckmittelleitung (60) zur Versorgung des hydrodynamischen Kreises (24) mit Kupplungsfluid und mit einer zweiten Druckmittelleitung (62) zur Versorgung eines dem Kolben (54) zugeordneten Druckraumes (55) mit Kupplungsfluid, wobei die Überbrückungskupplung (56) zumindest im Wesentlichen vom hydrodynamischen Kreis (24) umschlossen ist, dem wenigstens eine einen Austausch von Kupplungsfluid mit dem Druckraum (55) zumindest reduzierende Abdichtung (82) sowie wenigstens eine einen definierten Austausch von Kupplungsfluid mit dem Druckraum (55) gewährende Drosselstelle (80) zugeordnet ist,
**dadurch gekennzeichnet,**
**dass** der Kolben (54) mit seiner von der wenigstens einen Reibfläche (69) der Überbrückungskupplung (56) abgewandten Seite (140) als erste Wandung (142) des Druckraums (55) wirksam ist, dem in Richtung zum Turbinenrad (19) eine zweite Wandung (144) zugeordnet ist, und dass an der radialen Außenseite der beiden Wandungen (142, 144) eine zwischen denselben wirksame Abdichtung (82) gegenüber dem hydrodynamischen Kreis (24) vorgesehen ist.

2. Hydrodynamische Kopplungsvorrichtung nach Anspruch 1,
**dadurch gekennzeichnet**,
dem zweite Wandung (144) als eine den Kolben (54) drehfest, aber axial verlagerbar an das Kupplungsgehäuse (5) anbindende Drehsicherung (76) wirksam ist.

3. Hydrodynamische Kopplungsvorrichtung nach Anspruch 1 oder 2,
**dadurch gekennzeichnet,**
**dass** die Abdichtung (82) an der zweiten Wandung (144) vorzugsweise im Erstreckungsbereich von deren radial äußerem Ende (79) aufgenommen ist und dort mit einem an dem Kolben (54) vorgesehenen, sich im Wesentlichen axial in Richtung zur zweiten Wandung (144) erstreckenden Bund (84) kraft- oder formschlüssig in Wirkverbindung tritt.

4. Hydrodynamische Kopplungsvorrichtung nach einem der Ansprüche 1 bis 3,
**dadurch gekennzeichnet,**
**dass** die zweite Wandung (144) zur Aufnahme der zwischen hydrodynamischem Kreis (24) und Druckraum (55) wirksamen Drosselstelle (80) dient.

5. Hydrodynamische Kopplungsvorrichtung nach einem der Ansprüche 1 bis 3,
**dadurch gekennzeichnet,**
**dass** die Drosselstelle (80) im Erstreckungsbereich des radial inneren Endes (77) der Wandung (144) vorgesehen ist.

6. Hydrodynamische Kopplungsvorrichtung nach einem der Ansprüche 1 bis 5,
**dadurch gekennzeichnet,**
**dass** die Drosselstelle (80) durch zumindest eine in der zweiten Wandung (144) vorgesehene Durchgangsöffnung (81) gebildet ist.

7. Hydrodynamische Kopplungsvorrichtung nach einem der Ansprüche 1 bis 6,
**dadurch gekennzeichnet,**
**dass** mittels einer Axialfederung (58) eine axiale Vorbelastung des Kolbens (54) gegenüber der Reibfläche (69) der Überbrückungskupplung (56) vorgenommen wird.

8. Hydrodynamische Kopplungsvorrichtung nach Anspruch 7,
**dadurch gekennzeichnet,**
**dass** der Kolben (54) durch die Axialfederung (58) mit einer von der Reibfläche (69) fortweisenden Vorbelastung beaufschlagbar ist.

9. Hydrodynamische Kopplungsvorrichtung nach einem der Ansprüche 1 bis 8,
**dadurch gekennzeichnet,**
**dass** die erste Druckmittelleitung (60) durch zumindest einen mit wenigstens einer Radialkomponente verlaufenden Kanal (134) gebildet und mit einem Kolbenraum (61) des hydrodynamischen Kreises (24) verbunden ist.

10. Hydrodynamische Kopplungsvorrichtung nach einem der Ansprüche 1 bis 9,
**dadurch gekennzeichnet,**
**dass** die zweite Druckmittelleitung (62) durch zumindest einen mit wenigstens einer Radialkomponente verlaufenden Kanal (136) gebildet und mit dem Druckraum (55) verbunden ist.

11. Hydrodynamische Kopplungsvorrichtung nach einem der Ansprüche 1 bis 10 mit einem Leitrad, das über einen axial beidseits mit Druckscheiben positionsgesicherten Freilauf aufgenommen ist,
**dadurch gekennzeichnet,**
**dass** die Druckscheiben (112, 114) frei von zur Versorgung des hydrodynamischen Kreises (24) dienenden Durchflusskanälen für Kupplungsfluid sind.

12. Hydrodynamische Kopplungsvorrichtung nach einem der Ansprüche 1 bis 11,
**dadurch gekennzeichnet,**
**dass** in der den Druckraum (55) vom hydrodynamischen Kreis (24) trennenden zweiten Wandung (144) ein Rückschlagventil (116) aufgenommen ist, das bei einem Überdruck im Druckraum (55) einen Strömungsdurchfluß unterbindet, bei einem Überdruck im hydrodynamischen Kreis (24) dagegen einen Durchfluß von Kupplungsfluid freigibt.

13. Hydrodynamische Kopplungsvorrichtung nach Anspruch 12,
**dadurch gekennzeichnet,**
**dass** das Rückschlagventil (116) über einen in einer Aufnahmeöffnung (122) der zweiten Wandung (144) vorgesehenen Schaft (120) axial verlagerbar positioniert ist, und zumindest eine Durchflußöffnung (124) in der Drehsicherung (76) durch einen Verschlußdeckel (118) in Schließposition überdeckt, in Öffnungsposition dagegen freigibt.

14. Hydrodynamische Kopplungsvorrichtung nach Anspruch 13,
**dadurch gekennzeichnet,**
**dass** das Rückschlagventil (116) aus einem druckbelastbaren und thermisch belastbaren Kunststoff besteht.

15. Hydrodynamische Kopplungsvorrichtung nach einem der Ansprüche 1 bis 14 mit einer Überbrückungskupplung, die zumindest eine mit einer Nutung versehene Reibfläche aufweist,
**dadurch gekennzeichnet,**
**dass** die Nutung (70) über zumindest einen volumenstarken Nutungskanal (126) zwischen wenigstens zwei Reibsegmenten (128) verfügt.

16. Hydrodynamische Kopplungsvorrichtung nach einem der Ansprüche 1 bis 15
**dadurch gekennzeichnet,**
**dass** die Nutung (70) über eine Vielzahl von Nutungskanälen (126) zwischen Reibsegmenten (128) verfügt.

## Claims

1. Hydrodynamic coupling device (1), comprising at least one pump wheel (17) connected to a drive (2) via a clutch housing (5) and a turbine wheel (19) connected to an output drive (43) for forming a hydrodynamic circuit (24), a lock-up clutch (56) with at least one piston (54) and at least one friction surface (69) acting between said at least one piston (54) and an adjacent support (7) for connecting the drive (2) to the output drive (43) while bypassing the hydrodynamic circuit (24), and a pressure circuit (97) in the form of a dual-line system with a first pressure medium conduit (60) for supplying the hydrodynamic circuit (24) with coupling fluid and with a second pressure medium conduit (62) for supplying a pressure chamber (55) associated with the piston (54) with coupling fluid, the lock-up clutch (56) being enclosed at least substantially by the hydrodynamic circuit (24), with which hydrodynamic circuit (24) there are associated at least one seal (82) at least reducing an exchange of coupling fluid with the pressure chamber (55) and at least one throttle point (80) ensuring a defined exchange of coupling fluid with the pressure chamber (55), **characterized in that** the side (140) of the piston (54) oriented away from the at least one friction surface (69) of the lock-up clutch (56) acts as a first wall (142) of the pressure chamber (55), with which a second wall (144) is associated in the direction of the turbine wheel (19), and **in that** a seal (82) is provided, with respect to the hydrodynamic circuit (24), acting between the two walls (142, 144) on the radially outer side thereof.

2. Hydrodynamic coupling device according to Claim 1, **characterized in that** a rotary retaining element (76) connecting the piston (54) to the clutch housing (5) in a non-rotatable but axially displaceable manner acts on the second wall (144).

3. Hydrodynamic coupling device according to Claim 1 or 2, **characterized in that** the seal (82) on the second wall (144) is preferably accommodated within the range of extension of the radially outer end (79) thereof and, at that location, comes into non-positive or positive effective connection with a collar (84) provided on the piston (54) and extending substantially axially in the direction of the second wall (144).

4. Hydrodynamic coupling device according to any one of Claims 1 to 3, **characterized in that** the second wall (144) serves to accommodate the throttle point (80) acting between the hydrodynamic circuit (24) and the pressure chamber (55).

5. Hydrodynamic coupling device according to any one of Claims 1 to 3, **characterized in that** the throttle point (80) is provided within the range of extension of the radially inner end (77) of the wall (144).

6. Hydrodynamic coupling device according to any one of Claims 1 to 5, **characterized in that** the throttle point (80) is formed by at least one through-aperture (81) provided in the second wall (144).

7. Hydrodynamic coupling device according to any one of Claims 1 to 6, **characterized in that** the piston (54) is axially preloaded with respect to the friction surface (69) of the lock-up clutch (56) by means of an axial spring element (58).

8. Hydrodynamic coupling device according to Claim 7, **characterized in that** the piston (54) can be loaded by the axial spring element (58) with a preload acting away from the friction surface (69).

9. Hydrodynamic coupling device according to any one of Claims 1 to 8, **characterized in that** the first pressure medium conduit (60) is formed by at least one passage (134) which runs with at least one radial component and is connected to a piston chamber (61) of the hydrodynamic circuit (24).

10. Hydrodynamic coupling device according to any one of Claims 1 to 9, **characterized in that** the second pressure medium conduit (62) is formed by at least one passage (136) which runs with at least one radial component and is connected to the pressure chamber (55).

11. Hydrodynamic coupling device according to any one of Claims 1 to 10 with a stator which is accommodated via a freewheel positionally secured axially by pressure discs on both sides, **characterized in that** the pressure discs (112, 114) are free of through-flow passages for coupling fluid serving to supply the hydrodynamic circuit (24).

12. Hydrodynamic coupling device according to any one of Claims 1 to 11, **characterized in that** a non-return valve (116) which prevents a through-flow in the event of overpressure in the pressure chamber (55), but opens a through-flow of coupling fluid in the event of overpressure in the hydrodynamic circuit (24), is accommodated in the second wall (144) separating the pressure chamber (55) from the hydrodynamic circuit (24).

13. Hydrodynamic coupling device according to Claim 12, **characterized in that** the non-return valve (116) is positioned in an axially displaceable manner via a stem (120) provided in a receiving opening (122) in the second wall (144), and covers at least one through-flow orifice (124) in the rotary retaining element (76) with a closing lid (118) in the closed position, but opens said at least one through-flow orifice (124) in the open position.

14. Hydrodynamic coupling device according to Claim 13, **characterized in that** the non-return valve (116) is made of a plastics material which can be subjected to pressure loads and to thermal loads.

15. Hydrodynamic coupling device according to any one of Claims 1 to 14 with a lock-up clutch which has at least one friction surface provided with a grooving, **characterized in that** the grooving (70) has at least one high-volume grooving channel (126) between at least two friction segments (128).

16. Hydrodynamic coupling device according to any one of Claims 1 to 15, **characterized in that** the grooving (70) has a multiplicity of grooving channels (126) between friction segments (128).

## Revendications

1. Dispositif d'embrayage hydrodynamique (1), comportant au moins une roue de pompe (17) reliée par l'intermédiaire d'un carter d'embrayage (5) avec une transmission d'entrée (2) et une roue de turbine (19) reliée avec une transmission de sortie (43), pour former un circuit hydrodynamique (24), un accouplement de pontage (56) avec au moins un piston (54) et au moins une surface de friction active (69) entre celui-ci et un appui (7) voisin pour la liaison de la transmission d'entrée (2) avec la transmission de sortie (43), en contournant le circuit hydrodynamique (24), et un circuit sous pression (97) sous forme d'un système à deux conduits (60) avec un premier conduit d'agent sous pression (60) pour l'alimentation en fluide d'embrayage du circuit hydrodynamique (24) et avec un deuxième conduit d'agent sous pression (62) pour l'alimentation en fluide d'embrayage d'une chambre de compression (55) associée au piston (54), l'accouplement de pontage (56) étant entouré au moins sensiblement par le circuit hydrodynamique (24), auquel est associé au moins un joint (82) réduisant pour le moins l'échange de fluide d'embrayage avec la chambre de compression (55), ainsi qu'au moins une zone d'étranglement (80) permettant un échange défini de fluide d'embrayage avec la chambre de compression (55), **caractérisé en ce que**, avec son côté (140) opposé à la au moins une surface de friction (69) de l'accouplement de pontage (56), le piston (54) est actif en tant que première paroi (142) de la chambre de compression (55), à laquelle en direction de la roue de turbine (19) est associée une deuxième paroi (144) et **en ce que** sur le côté extérieur radial des deux parois (142, 144), il est prévu un joint (82) actif entre ces dernières, par rapport au circuit hydrodynamique (24).

2. Dispositif d'embrayage hydrodynamique selon la revendication 1, **caractérisé en ce que**
la deuxième paroi (144) est active en tant que sécurité anti-rotation (76), rattachant le piston (54) au carter d'embrayage (5) de façon solidaire en rotation, mais déplaçable en direction axiale.

3. Dispositif d'embrayage hydrodynamique selon la revendication 1 ou 2, **caractérisé en ce que**
le joint (82) est logé sur la deuxième paroi (144), de préférence dans la zone d'extension de son extrémité radiale extérieure (79) et entre à cet endroit en liaison active par complémentarité de force ou de forme avec un collet de butée (84) prévu sur le piston (54), s'étendant en direction sensiblement axiale vers la deuxième paroi (144).

4. Dispositif d'embrayage hydrodynamique selon l'une quelconque des revendications 1 à 3, **caractérisé en ce que**
la deuxième paroi (144) sert de logement de la zone d'étranglement (80) active entre le circuit hydrodynamique (24) et la chambre de compression (55).

5. Dispositif d'embrayage hydrodynamique selon l'une quelconque des revendications 1 à 3, **caractérisé en ce que**
la zone d'étranglement (80) est prévue dans la zone d'extension de l'extrémité radiale intérieure (77) de la paroi (144).

6. Dispositif d'embrayage hydrodynamique selon l'une quelconque des revendications 1 à 5, **caractérisé en ce que**
la zone d'étranglement (80) est formée par au moins un orifice de passage (81) prévu dans la deuxième paroi (144).

7. Dispositif d'embrayage hydrodynamique selon l'une quelconque des revendications 1 à 6, **caractérisé en ce que**,
au moyen d'une suspension élastique axiale (58), une précontrainte axiale du piston (54) par rapport à la surface de friction (69) de l'accouplement de pontage (56) est assurée.

8. Dispositif d'embrayage hydrodynamique selon la revendication 7, **caractérisé en ce que**
le piston (54) est susceptible d'être soumis par la suspension élastique axiale (58) à une précontrainte s'éloignant de la surface de friction (69).

9. Dispositif d'embrayage hydrodynamique selon l'une quelconque des revendications 1 à 8, **caractérisé en ce que**
le premier conduit d'agent sous pression (60) est formé par au moins un canal (134) s'écoulant avec au moins une composante radiale et est relié avec une chambre de piston (61) du circuit hydrodynamique (24).

10. Dispositif d'embrayage hydrodynamique selon l'une quelconque des revendications 1 à 9, **caractérisé en ce que**
le deuxième conduit d'agent sous pression (62) est formé par au moins un canal (136) s'écoulant avec au moins une composante radiale et est relié avec la chambre de compression (55).

11. Dispositif d'embrayage hydrodynamique selon l'une quelconque des revendications 1 à 10, avec une roue directrice, qui est logée par l'intermédiaire d'une roue libre bloquée bilatéralement en position axiale par des rondelles de pression, **caractérisé en ce que**
les rondelles de pression (112, 114) sont sans canaux de circulation pour fluide d'embrayage, servant à l'alimentation du circuit hydrodynamique (24).

12. Dispositif d'embrayage hydrodynamique selon l'une quelconque des revendications 1 à 11, **caractérisé en ce que**
dans la deuxième paroi (144) séparant la chambre de compression (55) du circuit hydrodynamique (24) est logé un clapet anti-retour (116), qui dans le cas d'une surpression dans la chambre de compression (55) supprime un débit d'écoulement, et en revanche dans le cas d'une surpression dans le circuit hydrodynamique (24) libère un débit de fluide d'embrayage.

13. Dispositif d'embrayage hydrodynamique selon la revendication 12, **caractérisé en ce que**
le clapet anti-retour (116) est positionné en étant déplaçable en direction axiale par l'intermédiaire d'une tige (120) prévue dans un orifice de logement (122) de la deuxième paroi (144) et en position de fermeture, recouvre au moins un passage d'écoulement (124) dans la sécurité anti-rotation (76) par un couvercle de fermeture (118) et le libère au contraire, en position d'ouverture.

14. Dispositif d'embrayage hydrodynamique selon la revendication 13, **caractérisé en ce que**,
le clapet anti-retour (116) consiste en une matière plastique susceptible d'être soumise à une pression et à une contrainte thermique.

15. Dispositif d'embrayage hydrodynamique selon l'une quelconque des revendications 1 à 14, avec un accouplement de pontage, comportant au moins une surface de friction munie d'un rainurage, **caractérisé en ce que**
le rainurage (70) dispose d'au moins un canal de rainurage (126) à fort volume, entre au moins deux segments de friction (128).

16. Dispositif d'embrayage hydrodynamique selon l'une quelconque des revendications 1 à 15, **caractérisé en ce que**
le rainurage (70) dispose d'une pluralité de canaux de rainurage (126) entre des segments de friction (128).
